# FASCICULE DE BREVET EUROPEEN

(11) **EP 0 505 233 B1**
(45) Date de publication et mention de la délivrance du brevet: **08.02.1995**
(21) Numéro de dépôt: 92400607.5
(22) Date de dépôt: 09.03.1992
(51) Int. Cl.: G01B 11/26

(54) **Dispositif de mesure de la position angulaire d'un organe déplaçable à rotation par rapport à un organe fixe, notamment d'une monture de télèscope par rapport à une structure de support de celle-ci**
Einrichtung zum Messen der Winkellage eines schwenkbaren Teils relativ zu einem feststehenden Teil, insbesondere eines Teleskoprahmens relativ zu dessen Halterungsgestell
Device for measuring the angular position of an element movable in rotation with respect to a fixed element, especially of a frame of a telescope with respect to its supporting structure

(30) Priorité: 19.03.1991 FR 9103337
(43) Date de publication de la demande: 23.09.1992
(73) Titulaire: FRAMATOME, 92400 Courbevoie (FR)
(72) Inventeur: Lhenry, Bernard, F-71200 Le Creusot (FR)
(74) Mandataire: Habasque, Etienne Joel Jean-François

(56) Documents cités:
- DE-A- 3 901 876
- US-A- 3 941 345
- US-A- 4 126 394
- US-A- 4 620 092

## Description

La présente invention concerne un dispositif de mesure de la position angulaire d'un organe déplaçable à rotation par rapport à un organe fixe et notamment d'une monture de télescope par rapport à une structure de support de celle-ci.

Dans un certain nombre de machines comme par exemple dans les appareils astronomiques et plus particulièrement dans les télescopes, il est important de pouvoir mesurer d'une façon extrêmement précise la position angulaire d'un organe déplaçable à rotation par rapport à un organe fixe.

Ceci est par exemple le cas pour une monture de télescope déplaçable à rotation dans une structure de support de celle-ci et plus particulièrement lorsque l'on souhaite mesurer l'angle d'azimut ou l'angle d'élévation de cette monture.

En effet, ces mesures doivent être réalisées de manière extrêmement précise avec une résolution très importante.

On connait déjà dans l'état de la technique un certain nombre de dispositifs qui permettent de mesurer la position angulaire d'un organe mobile par rapport à un organe fixe.

Ainsi par exemple, on peut utiliser un codeur incrémental dans le prolongement de l'organe mobile, l'une des parties de ce codeur étant fixe et étant reliée à l'organe fixe, tandis que l'autre partie est montée déplaçable à rotation dans la partie fixe et est reliée à l'organe mobile, comme cela est décrit dans le document US-A-3 941 345.

La sortie de ce codeur est reliée à des moyens de détermination de la position angulaire de l'organe mobile par rapport à l'organe fixe à partir de la position angulaire relative des deux parties de codeur.

Des moyens d'accouplement quelconques peuvent être utilisés pour relier la partie mobile du codeur et l'organe mobile dont il y a lieu de mesurer la position angulaire par rapport à l'organe fixe.

La structure de ces moyens d'accouplement doit répondre à un certain nombre d'exigences pour ne pas perturber la mesure tout en acceptant certains défauts de coaxialité entre les organes, ces défauts étant dus par exemple à l'imperfection des paliers de support de l'organe mobile. Ceci conduit à construire des moyens d'accouplement extrêmement complexes, coûteux et d'une mise en oeuvre et d'un entretien relativement difficiles.

De plus, il n'est pas toujours facile d'avoir accès directement à l'extrémité de l'organe mobile pour relier cette extrémité à la partie mobile du codeur.

Pour résoudre ce dernier problème, on a utilisé d'autres dispositifs comprenant un ruban codé fixé par exemple à la périphérie de l'organe mobile. Ce ruban est associé à des moyens de lecture quelconques disposés en regard de ce ruban par exemple sur l'organe fixe et dont la sortie est reliée aux moyens de détermination de la position angulaire de l'organe mobile par rapport à l'organe fixe.

Cependant, la précision de ces dispositifs est liée à la dimension de l'ensemble.

De plus, ces dispositifs sont extrémement sensibles aux jeux de montage de l'organe mobile dans l'organe fixe, aux dilatations thermiques ou aux efforts mécaniques subis par ces deux organes, de sorte que pour obtenir une précision acceptable, il est nécessaire de multiplier les moyens de lecture à la périphérie du ruban et de procéder à des comparaisons et à une calibration in situ de ces dispositifs par rapport à un codeur optique incrémental d'étalonnage classique.

La validation de ces calibrations exige une fidélité des phénomènes observés, ce qui dans certaines applications, est impossible à obtenir, de sorte que la précision souhaitée ne peut pas toujours être obtenue avec ces dispositifs.

Le but de l'invention est donc de résoudre ces problèmes en proposant un dispositif de mesure dont la structure soit simple, fiable, d'un prix de revient peu élevé et qui permette d'obtenir une mesure de la position angulaire d'un organe mobile par rapport à un organe fixe, de manière très précise, quel que soit l'environnement de ces organes.

A cet effet, l'invention a pour objet un dispositif de mesure de la position angulaire d'un organe déplaçable à rotation par rapport à un organe fixe, notamment d'une monture de télescope par rapport à une structure de support de celle-ci, du type comportant un codeur incrémental comprenant deux parties déplaçables à rotation l'une dans l'autre, dont l'une est associée à l'organe mobile et l'autre à l'organe fixe et dont la sortie est reliée à des moyens de détermination de la position angulaire de l'organe mobile par rapport à l'organe fixe à partir de la position angulaire relative des deux parties de codeur, dans lequel le codeur est porté par l'un des organes, l'une des parties de celui-ci étant reliée à cet organe et l'autre étant reliée à des moyens optiques d'asservissement de cette partie de codeur dans au moins une orientation déterminée par rapport à l'autre organe, caractérisé en ce que le codeur incrémental est un codeur optique et en ce que les moyens d'asservissement comprennent une lunette à auto-collimation de faisceau associée à au moins une règle optique portée par l'autre organe pour piloter un moteur d'asservissement de l'orientation de la partie de codeur correspondante.

Selon différents modes de réalisation, la lunette à auto-collimation peut être associée à une, deux ou quatre règles optiques, régulièrement réparties autour de l'organe portant le codeur, et délimitant autant d'orientations possibles d'asservissement de la partie de codeur correspondante.

L'invention sera mieux comprise à l'aide de la description qui va suivre, donnée uniquement à titre d'exemple et faite en se référant aux dessins annexés, sur lesquels :
- la Fig.1 représente une vue schématique illustrant le fonctionnement d'un premier mode de réalisation d'un dispositif selon l'invention;
- la Fig.2 représente une vue schématique illustrant le fonctionnement d'un second mode de réalisation d'un dispositif selon l'invention;
- la Fig.3 représente une vue schématique illustrant le fonctionnement d'un troisième mode de réalisation d'un dispositif selon l'invention; et
- la Fig.4 représente une vue schématique illustrant le fonctionnement d'un quatrième mode de réalisation d'un dispositif selon l'invention.

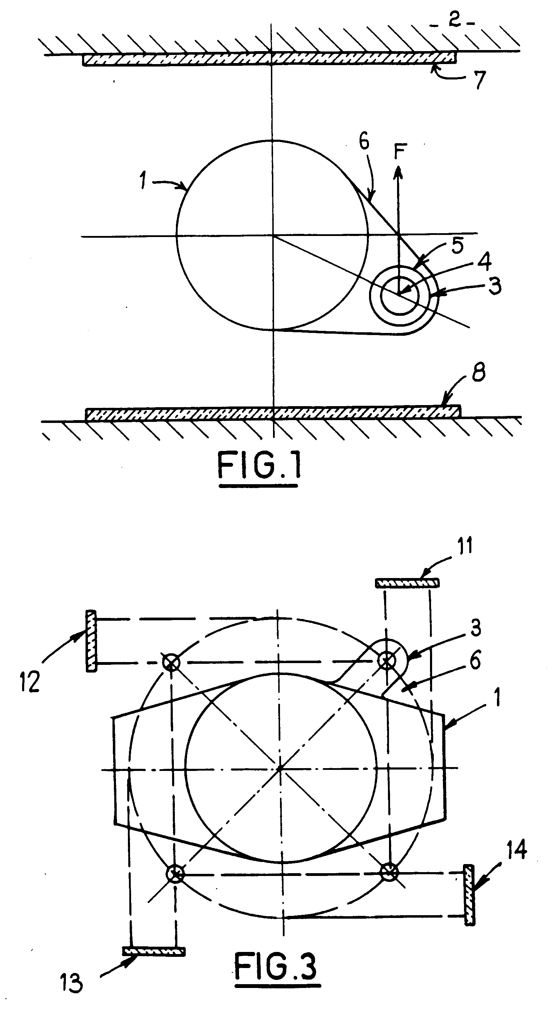

Ainsi qu'on peut le voir sur la Fig.1, un dispositif de mesure selon l'invention est adapté pour mesurer la position angulaire d'un organe 1 déplaçable à rotation par rapport à un organe fixe 2 et par exemple la position d'une monture de télescope par rapport à une structure de support de celle-ci.

Le dispositif selon l'invention comporte un codeur optique incrémental désigné par la référence générale 3 sur cette figure, comprenant de manière connue en soi, deux parties 4 et 5 déplaçables à rotation l'une dans l'autre dont une première 5 est associée à l'organe mobile 1 et une seconde 4, à l'organe fixe 2.

La sortie de ce codeur est reliée de manière connue en soi à des moyens de détermination de la position angulaire de l'organe mobile par rapport à l'organe fixe, à partir de la position angulaire relative des deux parties de codeur.

Ces différents moyens sont basés sur le comptage ou le décomptage de créneaux dans les signaux de sortie de ce codeur et sont bien connus dans l'état de la technique, de sorte que l'on ne le décrira pas en détail.

Selon l'invention, le codeur optique 3 est porté par l'organe mobile 1 et plus particulièrement par un bras de support 6 faisant saillie radialement à partir de cet organe mobile 1 de manière que le codeur soit entraîné lors de la rotation de l'organe mobile dans l'organe fixe.

La partie 5 du codeur est reliée à cet organe mobile et plus particulièrement à ce bras de support 6 tandis que l'autre partie de celui-ci, c'est à dire la partie désignée par la référence 4 sur cette figure, et qui dans ce cas, est constituée par la partie mobile du codeur, est reliée à des moyens d'asservissement de cette partie de codeur, dans au moins une orientation déterminée par rapport à l'organe fixe.

Cette orientation est désignée par la flèche F sur cette figure.

Ces moyens d'asservissement peuvent être constitués par tout moyen d'asservissement de type connu, comme par exemple une lunette à auto-collimation de faisceau associée à au moins une régle optique, par exemple 7, portée par l'organe fixe, pour piloter un moteur d'asservissement de l'orientation de la partie de codeur mobile par rapport à l'organe fixe.

On conçoit en effet que le codeur est porté par l'organe mobile et se déplace avec celui-ci.

Cependant, la partie de codeur mobile 4 est reliée à des moyens d'asservissement dans une orientation déterminée par rapport à l'organe fixe, de sorte que lors de la rotation de l'organe mobile, et donc du déplacement du codeur, la partie 4 de celui-ci reste dans l'orientation déterminée par rapport à l'organe fixe, et il se produit alors un déplacement relatif en rotation de la partie 5 de codeur par rapport à la partie 4 de celui-ci.

Il est ainsi possible en traitant les signaux de sortie de ce codeur de déterminer, comme dans l'état de la technique, le déplacement angulaire de ces parties de codeur l'une par rapport à l'autre et donc de l'organe mobile par rapport à l'organe fixe.

Dans le mode de réalisation représenté sur cette figure 1, la lunette à auto-collimation de faisceau est associée à deux règles optiques disposées de part et d'autre de l'organe mobile, en regard l'une de l'autre et désignées par les références 7 et 8.

Les moyens d'asservissement à lunette à auto-collimation de faisceau sont bien connus dans l'état de la technique. Ces moyens comprennent une lunette à auto-collimation associée à des moyens de détermination d'un signal d'erreur pilotant un moteur couple permettant d'orienter le faisceau optique de cette lunette, en permanence dans une orientation déterminée. Plus particulièrement, dans l'exemple illustré, ce faisceau est orienté perpendiculairement à l'une ou l'autre des régles optiques 7 ou 8, en utilisant le signal d'erreur fourni par la lunette pour maintenir la partie mobile de codeur dans une orientation associée à l'une des règles.

On conçoit ainsi que les différents problèmes évoqués précédemment concernant la précision de mesure liée au positionnement relatif de l'organe mobile par rapport à l'organe fixe, aux déformations dues aux dilatations thermiques et aux efforts mécaniques appliqués sur les organes, sont résolus dans la mesure où le dispositif selon l'invention ne comporte qu'un asservissement optique de la position de l'une des parties de codeur par rapport à l'organe fixe.

On notera en regard de cette figure 1, que l'axe de rotation de la partie mobile du codeur est parallèle à l'axe de rotation de l'organe mobile et que l'axe de la lunette à auto-collimation de faisceau est à peu près perpendiculaire à l'axe du codeur.

Dans le mode de réalisation représenté sur la Fig.1, la lunette à auto-collimation est associée à deux règles optiques disposées en regard l'une de l'autre de part et d'autre de l'organe mobile pour permettre la mesure de la position angulaire de l'organe mobile par rapport à l'organe fixe quelle que soit la position angulaire de celui-ci.

En effet, les moyens d'asservissement sont adaptés pour asservir l'orientation de la partie de codeur mobile par rapport à l'une ou l'autre régle au cours de la rotation de l'organe mobile par rapport à l'organe fixe et ceci pour éviter les angles morts.

En effet, dans le cas où une seule règle est utilisée, il n'est pas possible de déterminer la position angulaire de l'organe mobile par rapport à l'organe fixe sur un tour complet de cet organe mobile dans la mesure où pendant une partie de leur déplacement, la lunette à auto-collimation et le codeur passent derrière l'organe mobile qui masque la règle optique, empêchant ainsi les moyens d'asservissement d'assurer leur fonction. C'est pour cette raison que dans ce mode de réalisation deux régles optiques sont utilisées.

Il est également possible de prévoir deux règles optiques à 90° l'une par rapport à l'autre.

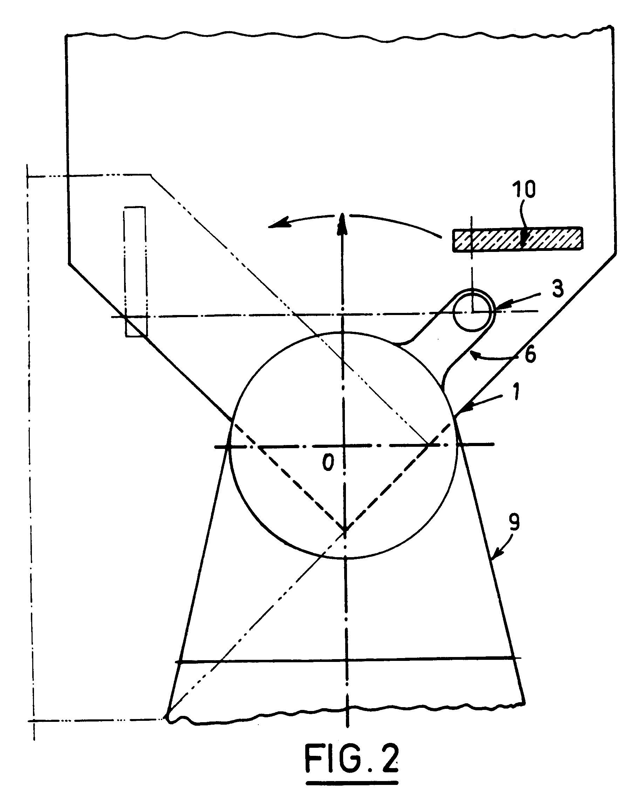

Sur la Fig.2, on a représenté un autre mode de réalisation d'un dispositif de mesure selon l'invention, dans lequel le codeur optique 3 est disposé à l'extrémité d'un bras de support 6 faisant saillie radialement à partir de l'organe fixe 9, tandis qu'une règle optique 10 est fixée sur l'organe mobile. Cette disposition est donc à l'inverse de celle représentée sur la Fig.1, dans la mesure où dans ce mode de réalisation représenté sur la Fig.2, c'est la règle 10 qui se déplace par rapport au codeur pour suivre les déplacements de l'organe mobile du télescope.

Le codeur optique est toujours muni de moyens d'asservissement de la partie mobile du codeur dans une orientation déterminée par rapport à cette règle optique, de sorte que lorsque la partie mobile du télescope se déplace, entraînant un déplacement de la règle optique, les moyens d'asservissement sont adaptés pour asservir la position de la partie mobile du codeur afin de suivre ces déplacements de la règle optique 10 et donc de la partie mobile du télescope, ce qui permet par traitement des signaux de sortie du codeur, de déterminer le déplacement angulaire de la partie mobile du télescope par rapport à la partie fixe.

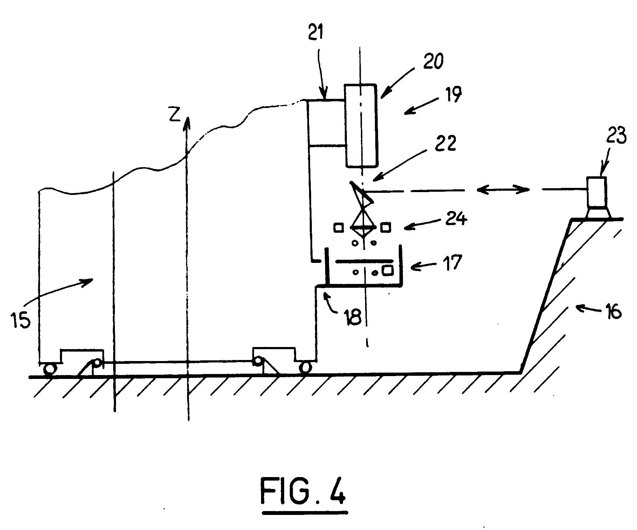

Sur la Fig.3, dans laquelle une disposition de codeur analogue à celle de la Fig.1 est utilisée, quatre régles optiques, respectivement 11, 12, 13 et 14, sont réguliérement réparties à 90° l'une par rapport à l'autre autour de l'organe mobile, de manière à délimiter quatre orientations d'asservissement à 90°.

Cette disposition permet également de contrôler et de mesurer la position angulaire de l'organe mobile 1 par rapport à l'organe fixe 2, quelle que soit celle-ci lors d'une rotation compléte de l'organe mobile 1.

Dans ce cas également, les moyens d'asservissement sont adaptés pour asservir l'orientation de la seconde partie de codeur par rapport à chaque régle au cours de la rotation de l'organe mobile par rapport à l'organe fixe.

Sur la Fig.4, on a représenté encore un autre mode de réalisation, d'un dispositif selon l'invention.

Celui-ci permet toujours de mesurer la position angulaire d'un organe mobile 15 par rapport à un organe fixe 16 et comporte un codeur optique incrémental 17 fixé à l'extrémité d'un bras de support 18, s'étendant radialement à partir de l'organe mobile 15.

Ce codeur optique est relié de manière classique à des moyens de détermination de la position angulaire de l'organe mobile par rapport à l'organe fixe à partir de la position de la partie mobile du codeur par rapport à la partie fixe.

La partie fixe de celui-ci est en effet reliée à l'organe mobile 15, tandis que la partie mobile est reliée à des moyens d'asservissement 19 permettant de maintenir cette partie mobile de codeur dans au moins une orientation déterminée par rapport à l'organe fixe 16.

Dans ce mode de réalisation, ces moyens d'asservissement comprennent également une lunette à auto-collimation 20 fixée à l'extrémité d'un bras de support 21 s'étendant radialement à partir de l'organe mobile 15 et dont l'axe est parallèle, voire confondu avec l'axe du codeur.

Des moyens 22 de renvoi à 90° du faisceau de la lunette à auto-collimation sont également prévus pour diriger ce faisceau en direction d'au moins une régle optique 23 disposée sur l'organe fixe 16.

Ces moyens d'asservissement comprennent toujours un moteur couple 24 adapté pour asservir l'orientation de la partie mobile de codeur dans au moins une orientation déterminée, à partir du signal d'erreur de sortie de la lunette à auto-collimation et permettre ainsi la mesure de la position angulaire de l'organe mobile par rapport à l'organe fixe.

On conçoit ainsi que dans ce mode de réalisation représenté sur la Fig.4, la lunette à auto-collimation de faisceau est portée par un bras 21 s'étendant radialement à partir de l'organe mobile 15 et que son axe est confondu avec l'axe du codeur, tandis que des moyens de renvoi sont utilisés pour diriger le faisceau de celle-ci en direction de la régle optique 23.

Dans les modes de réalisation représentés sur les Fig.1 à 3, cette lunette peut être portée directement par la partie mobile de codeur et s'étendre perpendiculairement à l'axe de rotation de cette partie de codeur, de manière que le faisceau de celle-ci soit dirigé directement vers les régles.

Bien entendu, d'autres modes de réalisation peuvent être envisagés en particulier pour les moyens d'asservissement.

On conçoit donc que la réinitialisation du dispositif de mesure selon l'invention est très simple dans la mesure où elle peut être opérée lorsque le télescope est arrêté en faisant tourner la partie mobile du codeur jusqu'à une position d'initialisation pour intégrer dans les moyens de traitement des signaux de sortie de ce codeur, une position de référence, et en ramenant ensuite cette partie mobile de codeur dans la position d'asservissement par rapport à la règle optique correspondante.

On dispose ainsi d'un moyen permettant de connaître la position absolue de la partie mobile du télescope sans la déplacer, de manière quasi-instantanée.

## Revendications

1. Dispositif de mesure de la position angulaire d'un organe déplaçable à rotation par rapport à un organe fixe, notamment d'une monture de télescope par rapport à une structure de support de celle-ci, du type comportant un codeur incrémental (3;17) comprenant deux parties (4,5) déplaçables à rotation l'une dans l'autre, dont l'une (5) est associée à l'organe mobile (1;15) et l'autre (4) à l'organe fixe (2;9;16) et dont la sortie est reliée à des moyens de détermination de la position angulaire de l'organe mobile (1;15) par rapport à l'organe fixe (2;9;16) à partir de la position angulaire relative des deux parties de codeur (4,5), dans lequel le codeur (3;17) est porté par l'un des organes (1;9;15), l'une des parties (5) de celui-ci étant reliée à cet organe (1;9) et l'autre (4) étant reliée à des moyens optiques (20) d'asservissement de cette partie de codeur dans au moins une orientation déterminée par rapport à l'autre organe (2;16), caractérise en ce que le codeur incrémental est un codeur optique et en ce que les moyens d'asservissement comprennent une lunette à auto-collimation de faisceau (20) associée à au moins une régle optique (7,8;10;11,12,13, 14;23) portée par l'autre organe (2;16) pour piloter un moteur (24) d'asservissement de l'orientation de la partie de codeur correspondante.

2. Dispositif selon la revendication 1, caractérisé en ce que la lunette à auto-collimation (20) est associée à deux règles optiques (7,8) délimitant deux orientations d'asservissement de la partie de codeur correspondante.

3. Dispositif selon la revendication 2, caractérisé en ce que les deux règles optiques (7,8) sont disposées en regard l'une de l'autre, de part et d'autre de l'organe portant le codeur (1).

4. Dispositif selon la revendication 2, caractérisé en ce que les deux règles optiques sont disposées à 90° l'une de l'autre autour de l'organe portant le codeur (1).

5. Dispositif selon la revendication 2, caractérisé en ce que la lunette à auto-collimation est associée à quatre régles optiques (11,12,13,14) disposées à 90° l'une par rapport à l'autre autour de l'organe portant le codeur (1).

6. Dispositif selon l'une quelconque des revendications 2 à 5, caractérisé en ce que les moyens d'asservissement sont adaptés pour asservir l'orientation de la partie de codeur correspondante (4) par rapport à chaque régle au cours de la rotation de l'organe mobile par rapport à l'organe fixe.

7. Dispositif selon l'une quelconque des revendications précédentes, caractérisé en ce que le codeur (3;17) et les moyens d'asservissement (20) sont disposés à l'extrémité d'au moins un bras de support (6; 18, 21) s'étendant radialement à partir de l'organe portant le codeur (1;9; 15).

8. Dispositif selon la revendication 7, caractérisé en ce que l'axe de la lunette à auto-collimation de faisceau est à peu près perpendiculaire à l'axe du codeur.

9. Dispositif selon l'une quelconque des revendications 1 à 7, caractérisé en ce que l'axe de la lunette à auto-collimation (20) est à peu près parallèle à l'axe du codeur et en ce qu'il est prévu des moyens (22) de renvoi à 90° du faisceau de la lunette en direction de ladite au moins une règle (23).

10. Dispositif selon la revendication 9, caractérisé en ce que l'axe de la lunette (20) est confondu avec l'axe du codeur (17).

11. Dispositif selon la revendication 9, ou 10, caractérisé en ce que la lunette (20) est fixée à l'extrémité d'un bras de support (21), s'étendant radialement à partir de l'organe portant le codeur (15).

12. Dispositif selon l'une quelconque des revendications précédentes, caractérisé en ce que le codeur est porté par l'organe mobile (1;15) et en ce que la ou chaque règle optique est portée par l'organe fixe (2).

13. Dispositif selon l'une quelconque des revendications 1 à 11, caractérisé en ce que le codeur est porté par l'organe fixe (9) et en ce que la ou chaque règle optique est portée par l'organe mobile.

## Claims

1. Device for measuring the angular position of a member displaceable in rotation with respect to a fixed member, particularly a telescope mounting with respect to a support structure for the same, of the type incorporating an incremental encoder (3,17) having two parts (4,5) displaceable in rotation in one another, whereof one (5) is associated with the mobile member (1,15) and the other (4) with the fixed member (2,9,16) and whose output is connected to means for the determination of the angular position of the mobile member (1,15) with respect to the fixed member (2,9,16) on the basis of the relative angular position of the two encoder parts (4,5), wherein the encoder (3,17) is carried by one of the members (1,9,15), one of the parts (5) thereof being connected to said member (1,9) and the other part (4) being connected to optical means (20) for the servocontrol of said encoder part in at least one orientation determined with respect to the other amber (2,16), characterized in that the incremental encoder is an optical encoder and that the control means comprise a beam autocollimating telescope (20) associated with at least one optical rule (7,8,10,11,12,13,14,23) carried by the other member (2,16) in order to control a motor (24) dependent on the orientation of the corresponding encoder part.

2. Device according to claim 1, characterized in that the autocollimating telescope (20) is associated with two optical rules (7,8) defining two servocontrol orientations of the corresponding encoder part.

3. Device according to claim 2, characterized in that the two optical rules (7,8) are positioned facing one another on either side of the member carrying the encoder (1).

4. Device according to claim 2, characterized in that the two optical rules are positioned 90° from one another around the member carrying the encoder (1).

5. Device according to claim 2, characterized in that the autocollimating telescope is associated with four optical rules (11,12,13,14) arranged at 90° from one another around the member carrying the encoder (1).

6. Device according to any one of the claims 2 to 5, characterized in that the servocontrol means are able to control the orientation of the corresponding encoder part (4) with respect to each rule during the rotation of the mobile member relative to the fixed member.

7. Device according to any one of the preceding claims, characterized in that the encoder (3,17) and the servocontrol means (20) are located at the end of at least one support arm (6,18, 21) extending radially from the member carrying the encoder (1,9,15).

8. Device according to claim 7, characterized in that the axis of the beam autocollimating telescope is roughly perpendicular to the encoder axis.

9. Device according to any one of the claims 1 to 7, characterized in that the axis of the autocollimating telescope (20) is roughly parallel to the encoder axis and in that means (22) are provided for the 90° return of the telescope beam in the direction of the at least one rule (23).

10. Device according to claim 9, characterized in that the axis of the telescope (20) coincides with the axis of the encoder (17).

11. Device according to claim 9 or 10, characterized in that the telescope (20) is fixed to the end of a support arm (21) extending radially from the member carrying the encoder (15).

12. Device according to any one of the preceding claims, characterized in that the encoder is carried by the mobile member (1,15) and in that the or each optical rule is carried by the fixed member (2).

13. Device according to any one of the claims 1 to 11, characterized in that the coder is carried by the fixed member (9) and in that the or each optical rule is carried by the mobile member.

## Patentansprüche

1. Einrichtung zum Messen der Winkellage eines schwenkbaren Teils relativ zu einem feststehenden Teil, Insbesondere eines Teleskoprahmens relativ zu dessen Halterungsgestell, von der Bauart mit einem Inkrement-Codierer (3; 17) mit zwei ineinander drehbaren Bauteilen (4, 5), deren eines (5) mit dem beweglichen Teil (1; 15) und deren anderes (4) mit dem festen Teil (2; 9; 16) verbunden ist, und dessen Ausgang mit einer Einrichtung zur Bestimmung der Winkellage des beweglichen Teils (1; 15) relativ zu dem festen Teil (2; 9; 16) anhand der relativen Winkelposition der beiden Bauteile (4, 5) des Codierers verbunden ist, wobei der Codierer (3; 17) an einem der Teile (1; 9; 15) gehalten ist, eines der Bauteile (5) desselben mit diesem Teil (1; 9) verbunden ist und das andere (4) mit einer optischen Einrichtung (20) verbunden ist, zur Regelung dieses Bauteils des Codierers auf wenigstens eine Lage, die in bezug auf das andere Teil (2; 16) bestimmt ist, dadurch gekennzeichnet, daß der Inkrement-Codierer ein optischer Codierer ist und daß die Regeleinrichtung eine selbstkollimierende Strahloptik (20) aufweist, die wenigstens einem an dem anderen Teil (2; 16) gehaltenen optischen Lineal (7, 8; 10; 11, 12, 13, 14; 23) zugeordnet ist, um einen Motor (24) zur Lageregelung des entsprechenden Bauteils des Codierers anzusteuern.

2. Einrichtung nach Anspruch 1, dadurch gekennzeichnet, daß die selbstkollimierende Optik (20) zwei optischen Linealen (7, 8) zugeordnet ist, die zwei Regelstellungen des betreffenden Bauteils des Codierers definieren.

3. Einrichtung nach Anspruch 2, dadurch gekennzeichnet, daß die beiden optischen Lineale (7, 8) gegenüberliegend zueinander beiderseits des den Codierer tragenden Teils (1) angeordnet sind.

4. Einrichtung nach Anspruch 2, dadurch gekennzeichnet, daß die beiden optischen Lineale unter einem Winkel von 90° zueinander um das den Codierer tragende Teil (1) angeordnet sind.

5. Einrichtung nach Anspruch 2, dadurch gekennzeichnet, daß die selbstkollimierende Optik vier optischen Linealen (11, 12, 13, 14) zugeordnet ist, die unter einem Winkel von 90° relativ zueinander um das den Codierer tragende Teil (1) angeordnet sind.

6. Einrichtung nach einem der Ansprüche 2 bis 5, dadurch gekennzeichnet, daß die Regeleinrichtung dazu ausgebildet ist, die Lage des betreffenden Bauteils (4) des Codierers während der Drehung des beweglichen Teils relativ zu dem festen Teil in bezug auf jedes Lineal zu regeln.

7. Einrichtung nach einem der vorstehenden Ansprüche, dadurch gekennzeichnet, daß der Codierer (3; 17) und die Regeleinrichtung (20) am Ende wenigstens eines Tragarmes (6; 18, 21) angeordnet sind, der radial von dem den Codierer tragenden Teil (1; 9; 15) ausgeht.

8. Einrichtung nach Anspruch 7, dadurch gekennzeichnet, daß die Achse der selbstkollimierenden Strahloptik nahezu senkrecht auf der Achse des Codierers steht.

9. Einrichtung nach einem der Ansprüche 1 bis 7, dadurch gekennzeichnet, daß die Achse der selbstkollimierenden Optik (20) nahezu parallel zur Achse des Codierers ist und daß eine Einrichtung (22) zur Ablenkung des Strahls der Optik um 90° in Richtung auf das genannte wenigstens eine Lineal (23) vorgesehen ist.

10. Einrichtung nach Anspruch 9, dadurch gekennzeichnet, daß die Achse der Optik (20) mit der Achse des Codierers (17) zusammenfällt.

11. Einrichtung nach Anspruch 9 oder 10, dadurch gekennzeichnet, daß die Optik (20) am Ende eines Tragarms (21) befestigt ist, der radial von dem den Codierer tragenden Teil (15) ausgeht.

12. Einrichtung nach einem der vorstehenden Ansprüche, dadurch gekennzeichnet, daß der Codierer an dem beweglichen Teil (1; 15) gehalten ist und daß das oder jedes optische Lineal an dem feststehenden Teil (2) gehalten ist.

13. Einrichtung nach einem der Ansprüche 1 bis 11, dadurch gekennzeichnet, daß der Codierer an dem feststehenden Teil (9) gehalten ist und daß das oder jedes optische Lineal an dem beweglichen Teil gehalten ist.
